# EUROPÄISCHE PATENTSCHRIFT

(11) **EP 0 789 230 B1**
(45) Veröffentlichungstag und Bekanntmachung des Hinweises auf die Patenterteilung: **14.06.2006**
(21) Anmeldenummer: 97101705.8
(22) Anmeldetag: 04.02.1997
(51) Int. Cl.: G01F 11/28, G01N 1/10, B65B 3/30, G05D 11/00

(54) **Vorrichtung zum volumetrischen Dosieren von Stoffen sowie Verwendung der Vorrichtung**
Device for the volumetric dosage of material and its application
Dispositif de dosage volumétrique de matière et son application

(30) Priorität: 07.02.1996 DE 19604411
(43) Veröffentlichungstag der Anmeldung: 13.08.1997
(73) Patentinhaber: Dietrich, Yves, 1316 Chevilly (CH); Dietrich, Frédéric, jun., 1054 Morrens (CH)
(72) Erfinder: Dietrich, Frédéric, 1801 Le Mont-Pèlerin (CH)
(74) Vertreter: Hiebsch, Gerhard F.

(56) Entgegenhaltungen:
- EP-A- 0 029 186
- EP-A- 0 656 528
- FR-A- 2 621 390
- FR-A- 2 641 862
- US-A- 3 922 920
- US-A- 4 077 263
- US-A- 4 091 677

## Beschreibung

Die Erfindung betrifft eine Vorrichtung sowie ein Verfahren zum volumetrischen Dosieren von flüssigen, pastenförmigen- und/oder pulverförmigen Stoffen -- insbesondere zum Absondern von Stoffmengen aus einem Förderstrom -- mittels einer an eine Zufuhrleitung angeschlossenen und mit einem Auslass versehenen volumeneinstellbaren Messkammer nach dem Oberbegriff der Ansprüche 1 bzw. 14. Zudem erfasst die Erfindung die Verwendung der Vorrichtung.

Das quantitative Zumessen von Stoffmengen erfolgt im industriellen Bereich auf verschiedenen Wegen und erfasst stets Mess-, Steuer- und Regelvorgänge. So werden feste Stoffe im allgemeinen nach Gewicht oder Stückzahlen dosiert, flüssige Stoffe mit Durchflussmessern oder Dosierpumpen nach Volumen, gasförmige Stoffe mit Strömungsmessern.

Übliche Geräte zum Dosieren flüssiger, pastenförmiger und pulverförmiger Stoffe oder Medien sind so aufgebaut, dass die Ermittlung der Menge verhältnismäßig umständlich und mit nur relativer Genauigkeit durchgeführt wird. Vor allem trifft dies auf Dosieranlagen für geringe Mengen zu, wie sie etwa in der pharmazeutischen oder chemischen Industrie anfallen; für den Dosiervorgang ist von entscheidender Bedeutung, dass die eingesetzten Anlagen leicht und schnell gereinigt werden können, was bei den auf dem Markt befindlichen Einrichtungen nur bedingt möglich ist. Auch die erforderliche Konstanz der abgemessenen bzw. dosierten Mengen ist bei bekannten Vorrichtungen kaum gegeben. Abweichungen -- und damit ungenaue Mengen -- treten häufig auf, weshalb es mit den bekannten Dosiereinrichtungen zu Problemen führen kann, beispielsweise Impfstoffe mit ausreichender Genauigkeit zu dosieren; diese werden bis her noch zumeist von Hand in Ampullen dosiert.

In der FR 2 641 862 werden eine Vorrichtung und ein Verfahren zum Dosieren von Pulvern beschrieben. Das Pulver wird in einen Rohrabschnitt angesaugt, der mit einem Ende in einen Pulvervorrat abgesenkt wird und an seinem anderen Ende durch einen beweglich gelagerten Filterpfropfen begrenzt wird. In diesem Rohrabschnitt lagert verschieblich ein dem Durchlass des Stoffes dienender Hohlstab, dessen unteres Ende einen porösen Pfropfen aufnimmt. Sobald genügend Pulver angesaugt ist, wird dieses -- während sich das Ansaugrohr noch im Pulvervorrat befindet -- durch eine entsprechende Bewegung des Filterpfropfens zusammengedrückt, so dass sich ein verfestigtes Materialstück ergibt. Dieses Materialstück wird dann -- noch im Rohr befindlich -- aus dem Pulvervorrat herausgehoben und an geeigneter Stelle ausgestoßen.

Der EP 0 029 186 A1 ist ein Röhrchen zur Abmessung kleinster Pulvermengen zu entnehmen. Dieses Röhrchen weist eine einseitig offene Aufnahmekammer -- gegebenenfalls variablen Volumens -- auf, die durch gasdurchlässige Seitenwände definiert ist. Bei Anlegen eines Unterdruckes kann eine entsprechende Menge Pulver in den Aufnahmeraum der Vorrichtung gesaugt werden.

Die EP 0 656 528 A1 offenbart eine modulare Dosiervorrichtung zum Dosieren von Flüssigkeiten und pastenartigen Substanzen. Dabei wird die zu dosierende Substanz über einen Aufnahmekanal angesaugt, indem ein sich vergrößernder Hohlraum, der gleichzeitig als Messkammer dient, mit dem Aufnahmekanal verbunden ist. Durch eine entsprechende Querverschiebung wird dieser Hohlraum danach in den Bereich eines Ausgabekanals verschoben und anschließend verkleinert, so dass eine der Größe der Messkammer entsprechende Menge über den Ausgabekanal abgegeben wird.

In Kenntnis dieses Standes der Technik hat sich der Erfinder das Ziel gesetzt, eine Vorrichtung der eingangs erwähnten Art zur sicheren Dosierung geringer bis kleinster Stoffmengen zu schaffen, d.h. die wiederholbare Dosiergenauigkeit für diese zu erhöhen. Zudem soll das Einsatzgebiet von Dosiervorrichtungen erweitert werden.

Zur Lösung dieser Aufgabe führt die Lehre des unabhängigen Patentanspruches; die Unteransprüche geben günstige Weiterbildungen_an.

Erfindungsgemäß ist zum Absondern geringer Stoffmengen zumindest ein kapillarer Messkanal als Messkammer eines Volumens der Messkammer bis höchstens 5 mm³ -- bevorzugt 1 mm³ -- an die Vakuumleitung angeschlossen, von dem seitlich-zueinander seiten- und höhenversetzt -- zwei kapillare Seitenkanäle ausgehen, wobei ein Seitenkanal mit der Zufuhrleitung für den Förderstrom verbunden und ein Seitenkanal an die Vakuumleitung als Unterdruckleitung angeschlossen ist; der der Dosiernadel benachbarte Seitenkanal leitet den Mediumstrom zur Messkammer und der auslassnähere ist an eine Vakuumleitung angeschlossen - letztere soll zudem einer Filtereinrichtung des Gehäuseblocks zugeordnet sein; zudem ist im kapillaren Messkanal eine in ihm verschiebliche Dosiernadel vorgesehen, deren freies Nadelende die Messkammer einends begrenzt.

Vorteilhafterweise soll zudem einer als Auslass dienenden Mündung des Messkanals ein bewegbarer Dichtkörper als Verschlüsselement zugeordnet sein, der bevorzugt mit einer Verschlusseinrichtung verbunden ist. Letztere ist erfindungsgemäß um eine Gelenkstelle begrenzt drehbar. Nach einem weiteren Merkmal der Erfindung sitzt der Dichtkörper auf einem Arm einer wippenartig ausgebildeten Verschlussklappe, deren anderer Arm an ein Steuerorgan angelenkt ist.

Als vorteilhaft für den Aufbau und die Betriebssicherheit hat sich erwiesen, die Dosiernadel mit ihrem dem Messkanal fernen Ende in einem -- mit einer Antriebseinrichtung verbundenen -- Kolben zu lagern, der in einer zylindrischen Ausnehmung eines den Messkanal enthaltenden Gehäuseblockes axial bewegbar verläuft.

Vor allem für das Behandeln mehrerer Komponenten ist es günstig, in der Vorrichtung mehrere Mesekammern bzw. Messkanäle mit -- durch jeweils eine Dosiernadel -- veränderlichem Volumen anzuordnen. Bevorzugt sind diese in der Vorrichtung angeordneten Messkammern oder Messkanäle mit zueinander unterschiedlichen Kammervolumina ausgestattet.

Um ein unkompliziertes Arbeiten zu ermöglichen, soll die Verschlusseinrichtung oder Verschlussklappe rechnergesteuert zu betätigen sowie mechanisch oder elektromagnetisch, pneumatisch oder hydraulisch in verschluss- bzw. in Öffnungsstellung überführbar ausgebildet sein.

Auch ist daran gedacht, die Verschlusseinrichtungen oder Verschlussklappen der Mehrzahl von Messkammern oder Messkanälen einzeln, in Gruppen oder gemeinsam ansteuerbar zu gestalten.

Die erfindungsgemäße Dosiervorrichtung und der dazu gehörende Aufbau erlauben eine hohe Genauigkeit der Dosierung, wie diese etwa für Impfstoffe gefordert wird. Der besondere Vorzug der Erfindung liegt darin, dass mehrere dieser Vorrichtungen nebeneinander angeordnet werden können, um automatische Dosierungen für ein Gemisch aus mehreren Komponenten zu ermöglichen die zu dosierenden Komponenten werden in mehreren linear oder kreisförmig angeordneten Messkammern oder in mehreren Vorrichtungen mit jeweils einer Messkammer dosiert und danach durch Öffnen der Auslässe bzw. der Verschlussklappe in Aufnahmebehälter überführt.

Von besonderer Bedeutung für die Sauberhaltung der Vorrichtung ist die Möglichkeit, bei Verschlussklappe in Verschlussstellung -- also geschlossenem Messkanal -- die Seitenkanäle des Messkanals im Gegenstrom zu reinigen.

Es entsteht so eine die vom Erfinder gesehene Aufgabe lösende Vorrichtung zum bevorzugten Einsatz zur Mikrodosierung in der pharmazeutischen oder chemischen Industrie, in der Lebensmittelindustrie, im Bereich der Biotechnik oder der automatisierten Analysetechnik. Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig. 1: die Frontansicht einer Dosiervorrichtung;
Fig. 2: einen vergrößerten Längsschnitt durch die Dosiervorrichtung;
Fig. 3: die Frontansicht auf einen Teil der Fig. 2.

Eine Dosiervorrichtung 10 der Höhe a von etwa 110 mm weist einen quaderförmigen Gehäuseblock 12 mit einer in dessen Längsachse A verlaufenden Bohrung als Zylinderkammer 14 für einen darin heb- und senkbaren Kolben 16 auf. Von diesem ragt axial eine mit ihm bewegliche Dosiernadel 18 ab. Der Durchmesser d der Zylinderkammer 14 ist kürzer als ein Drittel der Breite b von etwa 30 mm des Gehäuseblocks 12, dessen Höhe e etwa 50 mm beträgt.

In einem Abstand h von der Gehäuseunterfläche 20 geht die Zylinderkammer 14 mit einem Konusende 15 in einen kapillaren Meßkanal 22 als Meßkammer über; dieser liegt in der Längsachse A und endet in einer Auslaßkaverne 24 des Gehäuseblockes 12.

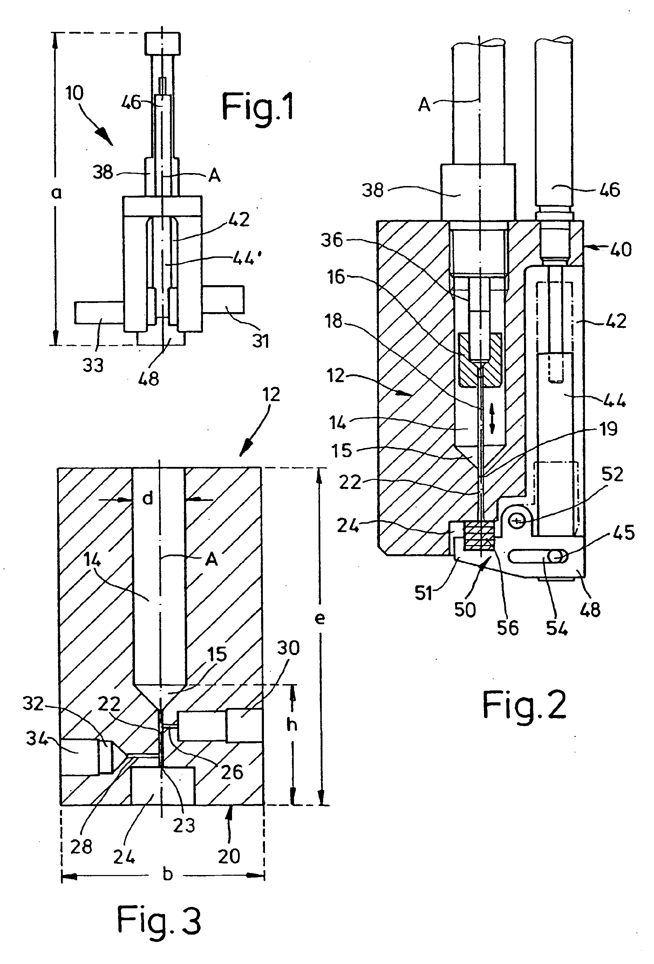

Zwischen jenem Konusende 15 und der Auslaßkaverne 24 gehen vom Meßkanal 22 rechtwinkelig sowie seiten- und höhenversetzt zwei ebenfalls kapillare Seitenkanäle 26 bzw. 28 ab, deren einer in einem -- in Fig. 3, rechtenEinlaßraum 30 für ein zu dosierendes Medium und deren anderer in einen Vakuumanschlußraum 32 mit Filter 34 münden. Der Durchmesser dieser Kanäle 22, 26, 28 mißt einen Bruchteil des Durchmessers d jener Zylinderkammer 14.

Insbesondere Fig. 1 verdeutlicht, daß an den Einlaßraum 30 ein Anschlußstutzen 31 und an den Vakuumanschlußraum 32 eine Vakuumleitung 33 anschließen.

Der erwähnte Kolben 16 ist über einen Schraubbolzen 36 an eine bei 38 angedeutete Antriebseinrichtung für die -- mit ihrem freien Nadelende 19 in den erwähnten Meßkanal 22 einragende -- Dosiernadel 18 angeschlossen und steuert deren Hubbewegung.

An der Mitte der Frontfläche 40 des Gehäuseblockes 12 ist gemäß Fig. 2 eine achsparallele Einformung 42 zu erkennen, in welcher ein Lenkergestänge 44 bewegbar verläuft; dieses verbindet einen Betätigungszylinder 46 mit einem freien Arm 48 einer am Gehäuseblock 12 angelenkten Verschlußklappe 50; diese ist am Gelenk 52 wippenartig angeordnet, und ihr Betätigungsarm 51 gegenüber der Mündung 23 des Meßkanals 22 abstandsveränderlich. Unterhalb des Gelenkes 52 ist am freien Arm 48 der Verschlußklappe 50 ein Langloch 54 als Kulisse für einen Querbolzen 45 des Lenkergestänges 44 zu erkennen.

Der Betätigungsarm 51 der Verschlußklappe 50 trägt einen blockförmigen Dichtungseinsatz 56, der in der in Fig. 2 gezeigten Verschlußstellung in der Auslaßkaverne 24 ruht und dabei die Mündung 23 des Meßkanals 22 verschlossen hält.

Die Meßstrecke bzw. das Meßvolumen des Meßkanals 22 wird durch die darin geführte Dosiernadel 18 nach oben eingestellt bzw. begrenzt. Bei Durchführung des Meßvorganges wird im Vakuumanschlußraum 32 bzw. am Filter 34 ein Unterdruck angelegt und das zu dosierende Medium über den Einlaßraum 30 angesaugt. Die Füllzeit für die Meßkammer bzw. den Meßkanal 22 wird über eine Steuerelektronik eingestellt und kontrolliert. Nach dem Füllvorgang wird die Meßkammer bzw. der Meßkanal 22 durch Erzeugung eines Gasüberdruckes am Einlaßraum 30 und durch Öffnen der Verschlußklappe 50 entleert.

Zur Reinigung der Seitenkanäle 26, 28 können diese bei geschlossener Verschlußklappe 50 im Gegenstrom durchspült werden.

Bevorzugt werden mehrere dieser Dosiervorrichtungen 10in Gruppen linear oder ringförmig angeordnet -- eingesetzt.

Bei einem nicht dargestellten Ausführungsbeispiel kann ein einziger Gehäuseblock 12 mehrere parallele Meßkanäle 22und damit auch mehrere Dosiernadeln 18 samt Antrieb 38 sowie eine entsprechende Zahl von Verschlußklappen 50enthalten; die Dosiernadeln 18 und die Verschlußklappen 50 können gemeinsam, einzeln oder in selektierbaren Gruppen steuerbar sein.

## Patentansprüche

1. Vorrichtung zum volumetrischen Dosieren von flüssigen, pastenförmigen und/oder pulverförmigen Stoffen, insbesondere zum Absondern von Stoffmengen aus einem Förderstrom, mittels einer an eine Zufuhrleitung (26) angeschlossenen und mit einem Auslass (24) versehenen volumeneinstellbaren Messkammer (22), bei der ein Messkanal (22) an eine Vakuumleitung (33) angeschlossen ist,
**dadurch gekennzeichnet,**
**dass** zum Absondern geringer Stoffmengen zumindest ein kapillarer Messkanal (22) als Messkammer eines Volumens der Messkammer (22) bis höchstens 5 mm³, vorzugsweise 1 mm³ an die Vakuumleitung (33) angeschlossen und von diesem seitlich zwei kapillare Seitenkanäle (26, 28) zueinander seiten- und höhenversetzt ausgehen, wobei ein Seitenkanal (26) mit der Zufuhrleitung für den Förderstrom verbunden und ein Seitenkanal (28) an die Vakuumleitung (33) als Unterdruckleitung angeschlossen ist, wobei im kapillaren Messkanal (22) eine in ihm verschiebliche Dosiernadel (18) zum Einstellen des Volumens der Messkammer vorgesehen ist, deren freies Nadelende (19) die Messkammer einends begrenzt.

2. Vorrichtung nach Anspruch 1, **dadurch gekennzeichnet, dass** einer als Auslass dienenden Mündung (23) des Messkanals (22) ein bewegbarer Dichtkörper (56) als Verschlusselement zugeordnet ist, der gegebenenfalls mit einer Verschlusseinrichtung (50) verbunden und diese um eine Gelenkstelle (52) begrenzt drehbar ist.

3. Vorrichtung nach Anspruch 2, **dadurch gekennzeichnet, dass** der Dichtkörper (56) auf einem Arm (51) einer wippenartig ausgebildeten Verschlussklappe (50) vorgesehen sowie deren anderer Arm (48) an ein Steuerorgan (44) angelenkt ist.

4. Vorrichtung nach einem der Ansprüche 1 bis 3, **dadurch gekennzeichnet, dass** die Dosiernadel (18) mit ihrem dem kapillaren Messkanal (22) fernen Ende in einem Kolben (16) lagert, der in einer zylindrischen Ausnehmung (14) eines den Messkanal enthaltenden Gehäuseblockes (12) axial bewegbar verläuft, wobei gegebenenfalls der Kolben (16) mit einer Antriebseinrichtung (38) verbunden ist.

5. Vorrichtung nach Anspruch 1, **dadurch gekennzeichnet, dass** die Unterdruckleitung (33) einer Filtereinrichtung (34) eines Gehäuseblocks (12) zugeordnet ist.

6. Vorrichtung nach Anspruch 1, **dadurch gekennzeichnet, dass** der Seitenkanal (28) für die Unterdruck- oder Vakuumleitung (33) dem Auslass (24) näher liegt als der andere Seitenkanal (26).

7. Vorrichtung nach einem der Ansprüche 1 bis 6, **dadurch gekennzeichnet, dass** in ihr mehrere Messkammern bzw. Messkanäle (22) mit durch jeweils eine Dosiernadel (18) veränderlichem Volumen angeordnet ist.

8. Vorrichtung nach einem der Ansprüche 1 bis 7, **dadurch gekennzeichnet, dass** die in ihr angeordneten Messkammern bzw. Messkanäle (22) in einer oder in mehreren Reihe/n oder ringförmig in zumindest einem Kreis angeordnet sind.

9. Vorrichtung nach Anspruch 7 oder 8, **dadurch gekennzeichnet, dass** mehrere in der Vorrichtung angeordnete Messkammern oder Messkanäle (22) zueinander unterschiedliche Kammervolumina aufweisen.

10. Vorrichtung nach Anspruch 2 oder 3, **dadurch gekennzeichnet, dass** die Verschlusseinrichtung (50) rechnergesteuert betätigbar ausgebildet ist.

11. Vorrichtung nach einem der Ansprüche 2, 3 oder 10, **dadurch gekennzeichnet, dass** die Verschlusseinrichtung oder Verschlussklappe (50) mechanisch oder elektromagnetisch in verschluss- bzw. in Öffnungsstellung überführbar bzw. pneumatisch oder hydraulisch in Verschluss- bzw. in Öffnungsstellung überführbar ausgebildet ist.

12. Vorrichtung nach einem der Ansprüche 2, 3 oder 10, 11, **dadurch gekennzeichnet, dass** die Verschlusseinrichtungen oder Verschlussklappen (50) der Mehrzahl von Messkammern oder Messkanälen (22) einzeln oder in Gruppen ansteuerbar ausgebildet sind.

13. Vorrichtung nach einem der Ansprüche 2, 3 oder 10 bis 12, **dadurch gekennzeichnet, dass** die Verschlusseinrichtungen oder Verschlussklappen (50) der Mehrzahl von Messkammern oder Messkanälen (22) gemeinsam ansteuerbar ausgebildet sind.

14. Verfahren zum volumetrischen Dosieren von flüssigen, pastenförmigen und/oder pulverförmigen Stoffen, insbesondere zum Absondern von Stoffmengen aus einem Förderstrom, mittels einer an eine Zufuhrleitung (26) angeschlossenen und mit einem Auslass (24) versehenen volumeneinstellbaren Messkammer (22), wobei Komponenten des Förderstroms in der/den Messkammer/n dosiert und jeweils am Auslass (24) der Messkammer in Aufnahmegefäße überführt werden mittels einer Vorrichtung nach wenigstens einem der voraufgehenden Ansprüche, **dadurch gekennzeichnet, dass** zum Absondern geringer Stoffmengen die Komponenten in kapillaren Messkanälen dosiert werden und das volumentrische Dosieren folgende Schritte aufzeigt: Einstellen des Messvolumens des Messkanals durch eine darin geführte Dosiernadel (19), Anlegen eines Unterdruckes an eine an dem Messkanal (22) angeschlossene Vakuumleitung (33), um die Komponenten über die Zufuhrleitung (26) im Messkanal anzusaugen und Erzeugen eines Gasüberdruckes an der Zufuhrleitung, um den Messkanal zu entleeren.

15. Verfahren nach Anspruch 14, **dadurch gekennzeichnet, dass** die Auslässe (24) der Messkammern (22) einzeln oder in Gruppen angesteuert werden.

16. Verfahren nach Anspruch 14, **dadurch gekennzeichnet, dass** die Auslässe (24) der Messkammern (22) gemeinsam angesteuert werden.

17. Verfahren nach einem der Ansprüche 14 bis 16, **dadurch gekennzeichnet, dass** nach dem Dosiervorgang die Seitenkanäle (26, 28) der Vorrichtung (10) bei geschlossenem Auslass (24) der Messkammer (22) im Gegenstrom gereinigt werden.

18. Verwendung der Vorrichtung nach wenigstens einem der Ansprüche 1 bis 13 zum Mikrodosieren von Stoffen in der chemischen oder pharmazeutischen Industrie.

## Claims

1. Device for volumetric metering of liquid, pasty and/or powdery materials, in particular for isolating quantities of materials from a delivery flow, by means of a volume-adjustable measuring chamber (22), adjoined to a feed line (26) and provided with an outlet (24) and in which a measuring channel (22) is adjoined to a vacuum line (33), **characterised in that** to isolate small quantities of materials at least one capillary measuring channel (22) is adjoined to the vacuum line (33) as measuring chamber of a volume of the measuring chamber (22) of up to 5 mm³, preferably 1 mm³, and laterally from this two capillary side channels (26, 28) issue, offset from one another laterally and in height, one side channel (26) being connected to the feed line for the delivery flow and one side channel (28) being adjoined to the vacuum line (33) as low pressure line, wherein in the capillary measuring channel (22) a metering needle (18) which can be displaced therein is provided for setting the volume of the measuring chamber, the free needle end (19) of which limits the measuring chamber at one end.

2. Device according to claim 1, **characterised in that** allocated to an orifice (23) of the measuring channel (22) serving as outlet is a movable sealing element (56) as closing element, which, if applicable, is connected to a closing device (50), which is rotatable to a limited extent about a hinged point (52).

3. Device according to claim 2, **characterised in that** the sealing element (56) is provided on one arm (51) of a closing flap (50) constructed in the manner of a rocker and its other arm (48) is linked to a control organ (44).

4. Device according to one of claims 1 to 3, **characterised in that** the metering needle (18) is positioned with its end remote from the capillary measuring channel (22) in a piston (16) which runs as axially movable in a cylindrical recess (14) of a housing block (12) containing the measuring channel, wherein, if applicable, the piston (16) is connected to a drive device (38).

5. Device according to claim 1, **characterised in that** the low pressure line (33) is allocated to a filter device (34) of a housing block (12).

6. Device according to claim 1, **characterised in that** the side channel (28) for the low pressure or vacuum line (33) is closer to the outlet (24) than the other side channel (26).

7. Device according to one of claims 1 to 6, **characterised in that** arranged in it are several measuring chambers or measuring channels (22) with a volume changeable in each case by a metering needle (18).

8. Device according to one of claims 1 to 7, **characterised in that** the measuring chambers or measuring channels (22) arranged therein are arranged in one or in several row(s) or in a ring shape in at least one circle.

9. Device according to claim 7 or 8, **characterised in that** several measuring chambers or measuring channels (22) arranged in the device have different chamber volumes from one another.

10. Device according to claim 2 or 3, **characterised in that** the closing device (50) is constructed as actuatable by computer control.

11. Device according to one of claims 2, 3 or 10, **characterised in that** the closing device or closing flap (50) is constructed as transferable into the closing or opening position mechanically or electromagnetically or transferable into the closing or opening position pneumatically or hydraulically.

12. Device according to one of claims 2, 3 or 10, 11, **characterised in that** the closing devices or closing flaps (50) of the majority of the measuring chambers or measuring channels (22) are constructed as actuatable individually or in groups.

13. Device according to one of claims 2, 3 or 10 to 12, **characterised in that** the closing devices or closing flaps (50) of the majority of the measuring chambers or measuring channels (22) are constructed as jointly actuatable.

14. Method for volumetric metering of liquid, pasty and/or powdery materials, in particular for isolating quantities of materials from a delivery flow, by means of a volume-adjustable measuring chamber (22) adjoined to a feed line (26) and provided with an outlet (24), components of the delivery flow being metered in the measuring chamber(s) and transferred in each case into receptacles at the outlet (24) of the measuring chamber, by means of a device according to at least one of the preceding claims, **characterised in that** for isolating small quantities of materials the components are metered in capillary measuring channels and the volumetric metering has the following steps: setting the measuring volume of the measuring channel by a metering needle (19) guided therein, applying a low pressure to a vacuum line (26) adjoined to the measuring channel (22), in order to extract the components in the measuring channel via the feed line (26) and generating an excess gas pressure on the feed line, in order to empty the measuring channel.

15. Method according to claim 14, **characterised in that** the outlets (24) of the measuring chambers (22) are actuated individually or in groups.

16. Method according to claim 14, **characterised in that** the outlets (24) of the measuring chambers (22) are actuated jointly.

17. Method according to one of claims 14 to 16, **characterised in that** after the metering process the side channels (26, 28) of the device (10) are cleaned in the reverse flow with the outlet (24) of the measuring chamber (22) closed.

18. Use of the device according to at least one of claims 1 to 13 for micro-metering materials in the chemical or pharmaceutical industries.

## Revendications

1. Dispositif pour le dosage volumétrique de substances liquides, pâteuses et/ou pulvérulentes, en particulier pour la séparation de quantités d'une substance à partir d'un flux de transport, au moyen d'un compartiment de mesure (22) relié à une conduite d'alimentation (26) et muni d'une sortie (24), dans lequel un canal de mesure (22) est relié à une conduite sous vide (33),
**caractérisé en ce que**, pour la séparation de petites quantités d'une substance, au moins un canal de mesure capillaire (22) est relié à la conduite sous vide (33) en tant que compartiment de mesure d'un volume du compartiment de mesure (22) jusqu'à 5 mm³ au maximum, de préférence 1 mm³, et à partir de celui-ci, deux canaux latéraux capillaires (26, 28) s'étendent latéralement en décalage latéral et en hauteur l'un par rapport à l'autre, un canal latéral (26) étant raccordé à la conduite d'alimentation pour le flux de transport et un canal latéral (28) étant relié à la conduite sous vide (33) en tant que conduite de dépression, et dans le canal de mesure capillaire (22), une aiguille de dosage (18) coulissant à l'intérieur de celui-ci est prévue pour le réglage du volume du compartiment de mesure, dont l'extrémité d'aiguille libre (19) délimite le compartiment de mesure à une extrémité.

2. Dispositif selon la revendication 1, **caractérisé en ce qu'**il est adjoint à une embouchure (23) du canal de mesure (22) faisant fonction de sortie un composant d'étanchéité mobile (56) en tant qu'élément de fermeture, qui est relié le cas échéant à un dispositif de fermeture (50), celui-ci pouvant pivoter dans une mesure limitée autour d'un point d'articulation (52).

3. Dispositif selon la revendication 2, **caractérisé en ce que** le composant d'étanchéité (56) est prévu sur un bras (51) d'un clapet de fermeture (50) conçu à la manière d'une bascule, dont l'autre bras (48) est articulé sur un organe de commande (44).

4. Dispositif selon l'une quelconque des revendications 1 à 3, **caractérisé en ce que** l'aiguille de dosage (18) se situe avec son extrémité éloignée du canal de mesure capillaire (22) dans un piston (16) qui s'étend de façon mobile en direction axiale dans un évidement cylindrique (14) d'un bloc de boîtier (12) contenant le canal de mesure, le piston (16) étant relié le cas échéant à un mécanisme d'entraînement (38).

5. Dispositif selon la revendication 1, **caractérisé en ce que** la conduite de dépression (33) est adjointe à un dispositif de filtrage (34) d'un bloc de boîtier (12).

6. Dispositif selon la revendication 1, **caractérisé en ce que** le canal latéral (28) pour la conduite de dépression ou sous vide (33) est plus proche de la sortie (24) que l'autre canal latéral (26).

7. Dispositif selon l'une quelconque des revendications 1 à 6, **caractérisé en ce que** plusieurs compartiments de mesure ou canaux de mesure (22) ayant un volume pouvant être modifié à chaque fois par une aiguille de dosage (18) sont agencés dans le dispositif.

8. Dispositif selon l'une quelconque des revendications 1 à 7, **caractérisé en ce que** les compartiments de mesure ou canaux de mesure (22) agencés dans le dispositif sont agencés dans une ou plusieurs rangées ou dans une forme annulaire dans au moins un cercle.

9. Dispositif selon l'une quelconque des revendications 7 ou 8, **caractérisé en ce que** plusieurs compartiments de mesure ou canaux de mesure (22) agencés dans le dispositif présentent des volumes de compartiment différents entre eux.

10. Dispositif selon l'une quelconque des revendications 2 ou 3, **caractérisé en ce que** le dispositif de fermeture (50) est conçu de façon à pouvoir être actionné en étant commandé par un ordinateur.

11. Dispositif selon l'une quelconque des revendications 2, 3 ou 10, **caractérisé en ce que** le dispositif de fermeture ou le clapet de fermeture (50) est conçu de façon à pouvoir être déplacé dans une position de fermeture ou d'ouverture de façon mécanique ou électromagnétique ou de façon à pouvoir être déplacé dans une position de fermeture ou d'ouverture de façon pneumatique ou hydraulique.

12. Dispositif selon l'une quelconque des revendications 2, 3 ou 10 ou 11, **caractérisé en ce que** les dispositifs de fermeture ou les clapets de fermeture (50) de la pluralité de compartiments de mesure ou de canaux de mesure (22) sont conçus de façon à pouvoir être commandés individuellement ou en groupes.

13. Dispositif selon l'une quelconque des revendications 2, 3 ou 10 à 12, **caractérisé en ce que** les dispositifs de fermeture ou les clapets de fermeture (50) de la pluralité de compartiments de mesure ou de canaux de mesure (22) sont conçus de façon à pouvoir être commandés ensemble.

14. Procédé de dosage volumétrique de substances liquides, pâteuses et/ou pulvérulentes, en particulier pour la séparation de quantités d'une substance à partir d'un flux de transport, au moyen d'un compartiment de mesure (22) relié à une conduite d'alimentation (26) et muni d'une sortie (24), où des composants du flux de transport sont dosés dans le(s) compartiment(s) de mesure et transférés à chaque fois à la sortie (24) du compartiment de mesure dans des récipients de collecte, au moyen d'un dispositif selon au moins l'une des revendications précédentes, **caractérisé en ce que**, pour la séparation de petites quantités d'une substance, les composants sont dosés dans les canaux de mesure capillaires et le dosage volumétrique comprend les étapes suivantes : réglage du volume de mesure du canal de mesure au moyen d'une aiguille de dosage (19) guidée à l'intérieur de celui-ci, création d'une dépression dans une conduite sous vide (33) reliée au canal de mesure (22) afin d'aspirer les composants dans le canal de mesure par le biais de la conduite d'alimentation (26), et production d'une surpression de gaz dans la conduite d'alimentation afin de purger le canal de mesure.

15. Procédé selon la revendication 14, **caractérisé en ce que** les sorties (24) des compartiments de mesure (22) sont commandées individuellement ou en groupes.

16. Procédé selon la revendication 14, **caractérisé en ce que** les sorties (24) des compartiments de mesure (22) sont commandées ensemble.

17. Procédé selon l'une quelconque des revendications 14 à 16, **caractérisé en ce que**, après le processus de dosage, les canaux latéraux (26, 28) du dispositif (10) sont nettoyés dans un courant opposé, la sortie (24) du compartiment de mesure (22) étant fermée.

18. Utilisation du dispositif selon au moins l'une des revendications 1 à 13 pour le microdosage de substances dans l'industrie chimique ou pharmaceutique.
